Europäisches Patentamt

European Patent Office

Office européen des brevets

(11) Veröffentlichungsnummer: **0 355 613 B1**

# (12) EUROPÄISCHE PATENTSCHRIFT

(45) Veröffentlichungstag der Patentschrift: **10.11.93**

(21) Anmeldenummer: **89114872.8**

(22) Anmeldetag: **11.08.89**

Die Akte enthält technische Angaben, die nach dem Eingang der Anmeldung eingereicht wurden und die nicht in dieser Patentschrift enthalten sind.

(51) Int. Cl.5: **D06L 3/02**, D06L 1/14, D06P 1/62, B01F 17/00

---

(54) **Verwendung von Mischungen, enthaltend (A) Alkali-, Ammonium-und/oder Aminsalze sulfonierter, ungesättigter Fettsäuren und (B) alkoxylierte Alkylalkohole als Netzmittel.**

---

(30) Priorität: **19.08.88 DE 3828226**

(43) Veröffentlichungstag der Anmeldung:
**28.02.90 Patentblatt 90/09**

(45) Bekanntmachung des Hinweises auf die Patenterteilung:
**10.11.93 Patentblatt 93/45**

(84) Benannte Vertragsstaaten:
**AT BE CH DE ES FR GB IT LI NL**

(56) Entgegenhaltungen:
**EP-A- 0 042 355       EP-A- 0 112 801
EP-A- 0 231 891       DE-A- 2 204 143
DE-A- 2 209 358       DE-C- 1 089 358
FR-A- 366 293          FR-A- 774 569
FR-A- 1 146 749       FR-A- 1 154 320
FR-A- 1 414 298       GB-A- 1 278 421
US-A- 1 881 348       US-A- 3 951 594**

(73) Patentinhaber: **Henkel Kommanditgesellschaft auf Aktien**

**D-40191 Düsseldorf(DE)**

(72) Erfinder: **Behler, Ansgar, Dr.
Siegfriedstrasse 80
D-4250 Bottrop(DE)**
Erfinder: **Wahle, Bernd, Dr.
Am Heidt 24
D-4044 Kaarst 2(DE)**
Erfinder: **Selen, Faize
Braunsbergerstrasse 8
D-4000 Düsseldorf 13(DE)**

---

EP 0 355 613 B1

**Beschreibung**

Die Erfindung betrifft die Verwendung von Mischungen, die A) Alkali-, Ammonium- und/oder Aminsalze sulfonierter, ungesättigter Fettsäuren und B) alkoxylierte Alkyl- und/oder Alkenylalkohole enthalten, als Netzmittel in wäßrigen alkalischen Behandlungsmitteln für textile Flächengebilde.

Wäßrige Behandlungsmittel zur Vorbehandlung und zum Bleichen von natürlichen Fasern, wie Baumwolle, oder von Mischungen aus natürlichen und synthetischen Fasern, wie Baumwolle/Polyester oder Baumwolle/Polyamid, erfordern den Zusatz von Netzmitteln, um einen rascheren und innigeren Kontakt zwischen dem Behandlungsmittel und dem Teryilmaterial zu erzielen. Mercerisierlaugen, Bleichmittel, Reinigungsmittel, Abkochmittel und Entfettungsmittel sind Beispiele für Vorbehandlungs- und Bleichmittel. Netzmittel, die in solchen Behandlungsmitteln enthalten sind, müssen wasserlöslich und alkalistabil sein sowie eine gleichmäßige Netzung der Ware gewährleisten. Des weiteren sollen sie in einfacher Weise den Behandlungsmitteln zugesetzt werden können, d.h. bei Raumtemperatur in flüssigem Zustand vorliegen. Darüber hinaus sollen Netzmittel umweltfreundlich sein, d.h. biologisch gut abgebaut werden und keine toxische Wirkung gegenüber Wasserorganismen besitzen.

Die Aufgabe der Erfindung bestand daher in der Entwicklung von flüssigen, wasserlöslichen, alkalistabilen und biologisch gut abbaubaren Netzmitteln mit verbesserten Netzmitteleigenschaften, die in alkalischen Behandlungsmitteln für textile Flächengebilde eingesetzt werden können.

Die Erfindung geht von der überraschenden Feststellung aus, daß Mischungen, die A) Alkali-, Ammonium- und/oder Aminsalze sulfonierter, ungesättigter Fettsäuren und B) alkoxylierte Alkyl- und/oder Alkenylalkohole in bestimmten Gewichtsverhältnissen A : B enthalten, die an Netzmittel in alkalischen Behandlungsmitteln gestellten hohen Anforderungen weitgehend erfüllen.

Erfindungsgegenstand ist dementsprechend die Verwendung von Mischungen, enthaltend

A) Alkali-, Ammonium- und/oder Aminsalze sulfonierter, ungesättigter Fettsäuren mit 12 bis 22 C-Atomen in den Fettresten und

B) alkoxylierte Alkyl- und/oder Alkenylalkohole der allgemeinen Formel

$$R—(OC_nH_{2n})_x—OH$$

in der R einen gerad- oder verzweigtkettigen Alkyl- oder Alkenylrest mit 6 bis 22 C-Atomen, n eine Zahl von 2 bis 4 und x eine Zahl von 2 bis 10 darstellt,

im Gewichtsverhältnis A : B zwischen 11 : 1 und 1 : 11 als Netzmittel in alkalischen Bleichflotten, Mercerisierflotten, alkalischen Aus der deutschen Offenlegungsschrift DE-A-10 89 358 ist bekannt, daß man hochwirksame Mercerisierhilfsmittel erhält, wenn man wasserlösliche Salze von Sulfaten ungesättigter Fettsäuren mit Salzen von Sulfobernsteinsäureestern kombiniert.

Die europäische Patentanmeldung EP-A-0 042 355 beschreibt Farbstoffpräparate, die nichtionogene Dispergiermittel und anionische Dispergiermittel, wie sulfatierte oder sulfonierte Fettsäuren, für die Dispergierung von schwerlöslichen Farbstoffen in Wasser enthalten.

In der europäischen Patentanmeldung EP-A-0 112 801 werden Magnesium-Komplexe oligomerer Phosphonsäureester in Kombination Polyhydroxyverbindungen als Stabilisatoren in alkalischen Bleichflotten beschrieben, die als Netzmittel anionische Tenside in Mischung mit nichtionischen Tensiden enthalten. Als bevorzugte Netzmittelmischung wird ein Gemisch aus Alkylsulfaten-, sulfonaten, Alkylbenzolsulfonsäuren und Addukte aus Ethylenoxid und Fettalkoholen empfohlen. Derartige Mischungen sind aber in ihren Netzmitteleigenschaften noch verbesserungsbedürftig.

Abkoch- und Entfettungsmitteln, Entschlichtungsprozessen und/oder zur Verbesserung der Flottenaufnahme in Färbeprozessen für textile Flächengebilde.

Als Netzmittel werden bevorzugt solche Mischungen verwendet, in denen das Gewichtsverhältnis A : B zwischen 8 : 2 und 2 : 8 liegt.

Alkali-, Ammonium- und/oder Aminsalze sulfonierter, ungesättigter Fettsäuren mit 12 bis 22 C-Atomen sind nach bekannten Verfahren zugänglich. Ihre Herstellung geht aus von einfach und/oder mehrfach ungesättigten Fettsäuren mit 12 bis 22 C-Atomen, beispielsweise Dodecensäure, Tetradecensäure, Palmitoleinsäure, Petroselinsäure, Ölsäure, Elaidinsäure, Linolsäure, Linolensäure, Erucasäure oder Mischungen solcher Fettsäuren. Vorzugsweise werden 1 - oder mehrfach ungesättigte Fettsäuren mit 16 bis 22 C-Atomen, beispielsweise Palmitoleinsäure, Ölsäure, Elaidinsäure, Linolsäure, Linolensäure, Erucasäure oder Mischungen solcher ungesättigten Fettsäuren eingesetzt. Die Sulfonierung ungesättigter Fettsäuren- kann mit Schwefelsäure, Oleum, Chlorsulfonsäure oder $SO_3$-haltigen Gasgemischen durchgeführt werden. Vorzugsweise wird jedoch gemäß GB 1 278 421 bei Temperaturen zwischen 20 und 60 °C mit Gasgemischen aus $SO_3$ und Luft oder Inertgasen, beispielsweise Stickstoff, in denen der $SO_3$-Gehalt zwischen 1 und 15 Vol.-% liegt, sulfoniert. Es werden pro Doppelbindung 0,3 bis 1,3 Mol $SO_3$ eingesetzt.

Die Sulfonierungen werden in üblichen für die Sulfatierung von Fettalkoholen oder die Sulfonierung von Fettsäureestern, Alkylbenzolen oder Olefinen geeigneten und gebräuchlichen Reaktoren, vorzugsweise vom Typ des Fallfilmreaktors, kontinuierlich oder diskontinuierlich durchgeführt (s. beispielsweise in Kirk-Othmer: Encyclopedia of Chemical Technology 22, 28 ff (1983)).

Nach beendeter Sulfonierung wird das Reaktionsgemisch mit Alkalien, beispielsweise NaOH, KOH, $Na_2CO_3$, Ammoniak und/oder Ethanolaminen, in Form wäßriger Lösungen hydrolisiert. Die verwendete Alkalimenge wird so bemessen, daß das Endprodukt einen pH-Wert größer gleich 7 besitzt.

Die in den erfindungsgemäß zu verwendenden Mischungen enthaltenen alkoxylierten Alkyl- und/oder Alkenylalkohole werden durch Alkoxylierung gerad- und/oder verzweigtkettiger Alkyl- und/oder Alkenylalkohole natürlichen und/oder synthetischen Ursprungs mit Ethylenoxid, Propylenoxid und/oder Butylenoxid nach bekannten großtechnischen Verfahren hergestellt (s. beispielsweise in "Chemische Technologie" Band 7, Seite 131 bis 132, Karl-Hanser-Verlag, München-Wien (1986)). Vorzugsweise werden Alkyl- und/oder Alkenylalkohole mit Ethylenoxid und/oder Propylenoxid umgesetzt. Der mittlere Oxalkylierungsgrad x der erhaltenen Gemische homologer Oxalkylate, der der molaren Menge der angelagerten Alkylenoxide entspricht, liegt zwischen 2 und 10, vorzugsweise zwischen 2 und 6. Geeignete gerad- und/oder verzweigtkettige Alkyl- und/oder Alkenylalkohole mit 6 bis 22 C-Atomen sind beispielsweise Hexanol, Octanol, Octenol, Decanol, Dodecanol, Dodecenol, Tridecanol, Cetylalkohol, Stearylalkohol, Oleylalkohol, Behenylalkohol oder Gemische aus diesen Alkoholen. Vorzugsweise kommen Alkylalkohole mit 8 bis 18 C-Atomen, beispielsweise Octanol, Decanol, Dodecanol, Tridecanol, Cetylalkohol, Stearylalkohol oder Gemische aus diesen Alkoholen, zum Einsatz.

Decanol mit 2,9 Mol Ethylenoxid (EO), Isotridecylalkohol mit 5,5 Mol EO und/oder Isotridecylalkohol mit 6 Mol EO sind Beispiele für bevorzugt verwendete alkoxylierte Alkylalkohole.

Die erfindungsgemäß als Netzmittel zu verwendenden Mischungen enthaltend A) Alkali-, Ammonium- und/oder Aminsalze sulfonierter, ungesättigter Fettsäuren und B) alkoxylierte Alkyl- und/oder Alkenylalkohole werden hergestellt durch Mischen bei Temperaturen zwischen 18 und 25 °C.

Die Mischungen sind hellgelbe bis hellbraune, klare, wäßrige, neutrale bis alkalische Lösungen, die gewünschtenfalls mit Wasserstoffperoxidlösungen oder Alkalihypochloritlösungen (Chlorlauge) in an sich bekannter Weise bei Temperaturen zwischen 40 und 55 °C gebleicht werden können. Zur Stabilisierung gegen Bakterienbefall empfiehlt sich die Konservierung mit aus dem Stand der Technik bekannten Konservierungsmitteln, beispielsweise p-Hydroxybenzoat und/oder Sorbinsäure. Der Aktivsubstanzgehalt (AS) der erfindungsgemäß als Netzmittel zu verwendenden Mischungen liegt in den Lösungen zwischen 20 und 90 Gew.-%.

Die erfindungsgemäß zu verwendenden flüssigen Mischungen, die sich in einfacher Weise in Vorbehandlungs- und Bleichmitteln für natürliche Fasern enthaltende Textilmaterialien einarbeiten lassen, zeichnen sich durch gute Netzeigenschaften kombiniert mit hoher Alkalistabilität aus. Diese Mischungen können in alkalischen Kaltbleichflotten, Heißbleichflotten, Mercerisierlaugen, alkalischen Abkoch- und Entfettungsmitteln, Entschlichtungsprozessen und/oder zur Verbesserung der Flottenaufnahme in Färbeprozessen eingesetzt werden. Vorzugsweise werden sie jedoch in wäßrigen, alkalischen Bleichflotten verwendet. Diese Bleichflotten enthalten als bleichendes Agens Wasserstoffperoxid oder Verbindungen, die in wäßriger Lösung Wasserstoffperoxid bilden. Der pH-Wert dieser Bleichmittel wird mit Basen, beispielsweise mit NaOH und/oder KOH auf 10 bis 14 eingestellt. Die zum Bleichen von natürlichen Fasern, beispielsweise Baumwolle, oder von Mischungen aus natürlichen und synthetischen Fasern, beispielsweise Baumwolle/Polyester oder Baumwolle/Polyamid, verwendeten Bleichflotten, enthalten im Liter 10 bis 100 ml Wasserstoffperoxid, 35 Gew.-%ig, 5 bis 20 g Basen aus der Gruppe Natriumhydroxid und/oder Kaliumhydroxid, 5 bis 50 ml Stabilisatoren, zum Beispiel Natrium- und/oder Kaliumsilikatlösungen (40 °Bé) Ethylendiamintetraessigsäure in Form ihrer Salze und/oder Polyphosphate, 0,1 bis 1,0 g Magnesiumsalze, beispielsweise Magnesiumsulfat` 0,5 bis 10 g Sequestriermittel, zum Beispiel Securon [R] 540, Henkel KGaA, und 1 bis 30 g, bezogen auf Aktivsubstanz, der erfindungsgemäß zu verwendenden Mischungen. Die textilen Flächengebilde werden bei Temperaturen zwischen 15 und 90 °C, vorzugsweise bei einer Temperatur von etwa 20 °C (Kaltbleiche), gebleicht.

Beispiele

AS = Aktivsubstanz

1 . Herstellung von Ölsäuresulfonat, Dikaliumsalz

Technische Ölsäure (Edenor [R] TiO5, Henkel KGaA) wurde mit der äquimolaren Menge $SO_3$, verdünnt mit Luft ($SO_3$-Gehalt = 5 Vol.-%), in einem Fallfilmreaktor bei einer Temperatur von 25 °C zur Reaktion gebracht und anschließend mit wäßriger Kalilauge neutralisiert und hydrolisiert. Das Produkt besaß folgende Kenndaten:
Aniontensid (DGF-H-III-10): 39 Gew.-%
unsulfierte Anteile (DGF-G-III-66): 4,0 Gew.-%
pH-Wert: 8

2. Herstellung von Mischungen aus Ölsäuresulfonat, Dikaliumsalz und alkoxylierten Alkylalkoholen

a) In einem Rührgefäß wurden 400 g Ölsäuresulfonat, Dikaliumsalz, hergestellt nach Beispiel 1, und 300 g Decanol . 2,9 Mol Ethylenoxid bei Raumtemperatur bis zur Bildung einer homogenen Mischung verrührt.
b) Analog 2.a) wurde eine Mischung aus 400 g Ölsäuresulfonat, Dikaliumsalz und 600 g Isotridecylalkohol mit 6 Mol Ethylenoxid hergestellt.

3. Prüfung des Netzvermögens

a) Das Netzvermögen wurde nach DIN 53 901 im neutralen Bereich sowie mit Natronlauge bei 20 °C und bei 60 °C bestimmt. Die Netzmittelmenge betrug in allen Fällen 1 g AS/l. Die Ergebnisse sind in Tabelle 1 zusammengefaßt.

## Tabelle 1

| Netzmittel | Natronlauge | | | | | |
|---|---|---|---|---|---|---|
| | neutral | | 1,2 Gew.%ig | | 4 Gew.%ig | |
| | 20°C | 60°C | 20°C | 60°C | 20°C | 60°C |
| | (Angabe in Sekunden) | | | | | |
| Beispiel 2a | 90 | 100 | 65 | 90 | 100 | 150 |
| Beispiel 2b | 24 | 35 | 25 | 44 | 48 | 48 |
| zum Vergleich: | | | | | | |
| Ölsäuresulfonat, Dika-liumsalz | >1800 | 100 | 360 | 341 | >1800 | 195 |
| Decanol x 2,9 Mol Ethy-lenoxid | 17 | 25 | 15 | 127 | 57 | 184 |
| Sulfobernsteinsäuredi-isooctylester, Natrium-salz | 4 | 4 | 16 | >1800 | 559 | 323 |
| Isotridecylalkohol x 6 Mol Ethylenoxid | 16 | 10 | >1800 | >1800 | 60 | 500 |

b) Das Netzvermögen wurde an nach DIN 53901 in einer Kaltbleichflotte bei etwa 20 °C bestimmt. Die Kaltbleichflotte enthielt pro Liter Flotte 40 ml 35 Gew.-%iges Wasserstoffperoxid, 0,15 g $MgSO_4 . 7 H_2O$, 15 ml Wasserglas 38/40 °Bé, 16 ml NaOH (50 %), 2 g eines Komplexbildners (Securon[R] 540, Henkel KGaA) und 8 g AS Netzmittel.

## Tabelle 2

| Netzmittel | Netzvermögen in Sekunden |
|---|---|
| Beispiel 2a | 2,0 |
| Beispiel 2b | 2,0 |
| zum Vergleich: | |
| Ölsäuresulfonat, Dikaliumsalz | >600 |
| Decanol x 2,9 Mol Ethylenoxid | 3 |
| Sulfobernsteinsäurediissooctylester, Natriumsalz | 47 |
| Isotridecylalkohol x 6 Mol Ethylenoxid | 3 |

### 4. Bestimmung der Alkalistabilität

a) Die Alkalistabilität unterschiedlicher Netzmittel wurde bei 20 °C und bei 80 °C in Natronlauge unterschiedlicher Konzentrationen sofort und nach einer Stunde bestimmt. Die Ergebnisse sind in Tabelle 3 zusammengefaßt.

Tabelle 3 - Alkaliverträglichkeit

| Beispiel 2a | | am Anfang | nach 1 Stunde |
|---|---|---|---|
| (4,52 g AS/l) | | | |
| 7 Gew.%ige Natronlauge | 20 °C | trübe, homogen | unverändert |
| | 80 °C | trübe, homogen | inhomogen |
| 11,5 Gew.%ige Natronlauge | 20 °C | trübe, homogen | geringe Aufrahmung |
| | 80 °C | trübe, homogen | inhomogen |
| 17 Gew. %ige Natronlauge | 20 °C | trübe, homogen | geringe Aufrahmung |
| | 80 °C | trübe, homogen | inhomogen |

Fortsetzung Tabelle 3

| Beispiel 2b | | am Anfang | nach 1 Stunde |
|---|---|---|---|
| (4,52 g AS/l) | | | |
| 7 Gew.%ige Natronlauge | 20 °C | klar | klar |
| | 80 °C | klar | klar |
| 11,5 Gew.%ige Natronlauge | 20 °C | klar | klar |
| | 30 °C | klar | klar |
| 17 Gew.%ige Natronlauge | 20 °C | klar | klar |
| | 80 °C | klar | klar |

zum Vergleich:

Ölsäuresulfonat,

Dikaliumsalz

| (4,52 g AS/l) | | | |
|---|---|---|---|
| 7 Gew.%ige Natronlauge | 20 °C | klar | klar |
| | 80 °C | klar | klar |
| 11,5 Gew.%ige Natronlauge | 20 °C | klar | klar |
| | 80 °C | klar | klar |
| 17 Gew.%ige Natronlauge | 20 °C | klar | klar |
| | 80 °C | klar | klar |

EP 0 355 613 B1

Fortsetzung Tabelle 3

| Decanol x 2,9 Mol Ethylenoxid (4,52 g AS/l) | | am Anfang | nach 1 Stunde |
|---|---|---|---|
| 7 Gew.%ige Natronlauge | 20 °C | trübe | Bodensatz |
| | 80 °C | inhomogen | inhomogen |
| 11,5 Gew.%ige Natronlauge | 20 °C | inhomogen | inhomogen |
| | 80 °C | inhomogen | inhomogen |
| 17 Gew.%ige Natronlauge | 20 °C | inhomogen | inhomogen |
| | 80 °C | inhomogen | inhomogen |

| Sulfobernsteinsäurediisooctylester, Natriumsalz (4,52 g AS/l) | | | |
|---|---|---|---|
| 7 Gew.%ige Natronlauge | 20 °C | leichte Aufrahmung | inhomogen |
| | 80 °C | trübe | inhomogen |
| 11,5 Gew.%ige Natronlauge | 20 °C | inhomogen | inhomogen |
| | 80 °C | inhomogen | inhomogen |
| 17 Gew.%ige Natronlauge | 20 °C | inhomogen | inhomogen |
| | 80 °C | inhomogen | inhomogen |

EP 0 355 613 B1

**Fortsetzung Tabelle 3**

| Isotridecylalkohol × 6 Mol Ethylenoxid (4,52 g AS/l) | | am Anfang | nach 1 Stunde |
|---|---|---|---|
| 7 Gew.%ige Natronlauge | 20 °C | inhomogen | inhomogen |
| | 80 °C | inhomogen | inhomogen |
| 11,5 Gew.%ige Natronlauge | 20 °C | inhomogen | inhomogen |
| | 80 °C | inhomogen | inhomogen |
| 17 Gew.%ige Natronlauge | 20 °C | inhomogen | inhomogen |
| | 80 °C | inhomogen | inhomogen |

b) Die Alkalistabilität wurde in einer Kaltbleichflotte sofort, nach einer Stunde und nach 24 Stunden bestimmt. Die Zusammensetzung der Kaltbleichflotte entsprach der unter 3 b) angegebenen Zusammensetzung. Die Ergebnisse sind in Tabelle 4 zusammengefaßt.

— Tabelle 4

| Netzmittel (Einsatzmenge pro I Flotte: 8,0 g AS) | Alkalistabilität von | | | | | |
| | Flotte A | | | Flotte B | | |
| | so-fort | nach 1 h | nach 24 h | so-fort | nach 1 h | nach 24 h |
|---|---|---|---|---|---|---|
| Beispiel 2a | + | + | + | + | + | + |
| Beispiel 2b | + | + | + | + | + | + |
| zum Vergleich: | | | | | | |
| Ölsäuresulfonat, Dikaliumsalz | + | + | + | + | + | + |
| Decanol x 2,9 Mol Ethylenoxid | X | – | – | X | – | – |
| Sulfobernstein-säurediisooc-tylester, Na-triumsalz | X | – | – | – | – | – |
| Isotridecylal-kohol x 6 Mol Ethylenoxid | X | – | – | – | – | – |

Flotte B ist gegenüber Flotte A 7-fach verstärkt.

+ = keine Entmischung, homogen

X = beginnende Entmischung

– = entmischt

**Patentansprüche**

1. Verwendung von Mischungen, enthaltend
   A) Alkali-, Ammonium- und/oder Aminsalze sulfonierter, ungesättigter Fettsäuren mit 12 bis 22 C-Atomen in den Fettresten und
   B) alkoxylierte Alkyl- und/oder Alkenylalkohole der allgemeinen Formel

   $R—(OC_nH_{2n})_x—OH$

   in der R einen gerad- oder verzweigtkettigen Alkyl- oder Alkenylrest natürlichen oder synthetischen Ursprungs mit 6 bis 22 C-Atomen, n eine Zahl zwischen 2 und 4 und x eine Zahl zwischen 2 und 10 darstellt,
   im Gewichtsverhältnis A : B zwischen 11 : 1 und 1 : 11,

als Netzmittel in alkalischen Bleichflotten, Mercerisierflotten, alkalischen Abkoch- und Entfettungsmitteln, Entschlichtungsprozessen und/oder zur Verbesserung der Flottenaufnahme in Färbeprozessen für textile Flächengebilde.

2. Verwendung nach Anspruch 1, dadurch gekennzeichnet, daß das Gewichtsverhältnis A : B zwischen 8 : 2 und 2 : 8 liegt.

3. Verwendung nach einem oder beiden der Ansprüche 1 bis 2, dadurch gekennzeichnet, daß sulfonierte ungesättigte Fettsäuren mit 16 bis 22 C-Atomen verwendet werden.

4. Verwendung nach einem der mehreren der Ansprüche 1 bis 3, dadurch gekennzeichnet, daß in der allgemeinen Formel R einen gerad- oder verzweigtkettigen Alkylrest mit 8 bis 18 C-Atomen, n 2 und/oder 3 und x eine Zahl zwischen 2 und 6 darstellt.

5. Verwendung nach einem oder mehreren der Ansprüche 1 bis 4, dadurch gekennzeichnet, daß die Mischungen in alkalischen Bleichflotten verwendet werden.

6. Verwendung nach einem oder mehreren der Ansprüche 1 bis 5, dadurch gekennzeichnet, daß die alkalischen Bleichflotten pro Liter 10 bis 100 ml Wasserstoffperoxid, 35 Gew.-%ig, 5 bis 20 g Basen, 5 bis 50 ml Stabilisatoren, 0,1 bis 1,0 g Magnesiumsalze, 0,5 bis 10 g Sequestriermittel und 1,0 bis 30 g, bezogen auf Aktivsubstanz, der Mischungen aus A) und B) enthalten.

## Claims

1. The use of mixtures containing
   A) alkali metal ammonium and/or amine salts of sulfonated unsaturated $C_{12-22}$ fatty acids and
   B) alkoxylated alkyl and/or alkenyl alcohols corresponding to the following general formula

   $$R—(OC_nH_{2n})_x—OH$$

   in which R is a linear or branched $c_{6-22}$ alkyl or alkenyl radical, n is a number of 2 to 4 and x is a number of 2 to 10,
   in a ratio by weight of A to B of from 11 : 1 to 1 : 11 as wetting agents in alkaline bleaching liquors, mercerizing liquors, alkaline boil-off aids and degreasing preparations, desizing processes and/or for improving liquor uptake in dyeing processes for sheet-form textiles.

2. The use claimed in claim 1, characterized in that the ratio by weight of A to B is from 8 : 2 to 2 : 8.

3. The use claimed in claim 1 or both of claims 1 and 2, characterized in that sulfonated unsaturated $C_{16-22}$ fatty acids are used.

4. The use claimed in one or more of claims 1 to 3, characterized in that, in the general formula, R is a linear or branched $C_{8-18}$ alkyl radical, n is 2 and/or 3 and x is a number of 2 to 6.

5. The use claimed in one or more of claims 1 to 4, characterized in that the mixtures are used in alkaline bleaching liquors.

6. The use claimed in one or more of claims 1 to 5, characterized in that the alkaline bleaching liquors contain per litre from 10 to 100 ml 35%, by weight hydrogen peroxide, from 5 to 20 g bases, from 5 to 50 ml stabilizers, from 0.1 to 1.0 g magnesium salts, from 0.5 to 10 g sequestering agents and from 1.0 to 30 g, based on active substance, of the mixtures of A) and B).

## Revendications

1. Utilisation de mélanges contenant :
   A) des sels de métaux alcalins, d'ammonium et/ou d'amine d'acides gras insaturés sulfonés avec 12 à 22 atomes de C dans les restes gras et,

B) des alcools alkyliques et/ou alcényliques de formule générale :

$R - (OC_nH_{2n})_x - OH$

dans laquelle R est un reste alkyle ou alcényle linéaire ou ramifié avec 6 à 22 atomes de C, n est un nombre de 2 à 4, et x est un nombre de 2 à 10,
en proportion pondérale A:B comprise entre 11:1 et 1:11, comme agent mouillant dans les bains de blanchiment alcalins, les bains de mercerisage, les agents de décoction alcalins et de dégraissage, les processus de désencollage et/ou pour améliorer l'affinité des bains dans les procédés de teinture des structures planes textiles.

2.  Utilisation selon la revendication 1, caractérisée en ce que la proportion pondérale A:B est comprise entre 8:2 et 2:8.

3.  Utilisation selon l'une des revendications 1 à 2, ou les deux, caractérisée en ce qu'on utilise des acides gras insaturés sulfonés de 16 à 22 atomes de C.

4.  Utilisation selon l'une ou plusieurs des revendications 1 à 3, caractérisée en ce que dans la formule générale R représente un reste alkyle linéaire ou ramifié de 8 à 18 atomes de C, n est 2 et/ou 3 et x est un nombre compris entre 2 et 6.

5.  Utilisation selon l'une ou plusieurs des revendications 1 à 4, caractérisée en ce qu'on utilise les mélanges dans des bains de blanchiment alcalins.

6.  Utilisation selon l'une ou plusieurs des revendications 1 à 5, caractérisée en ce que les bains de blanchiment alcalins contiennent par litre 10 à 100 ml de peroxyde d'hydrogène, 35 % en poids, 5 à 20 g de bases, 5 à 50 ml de stabilisants, 0,1 à 1,0 g de sels de magnésium, 0,5 à 10 g de séquestrants et 1,0 à 30 g par rapport à la substance active des mélanges de A) et B).